# EUROPÄISCHE PATENTSCHRIFT

(11) **EP 2 445 675 B1**
(45) Veröffentlichungstag und Bekanntmachung des Hinweises auf die Patenterteilung: **08.01.2014**
(21) Anmeldenummer: 10720448.9
(22) Anmeldetag: 01.06.2010
(51) Int. Cl.: B23B 45/00, B25D 16/00

(54) **HANDGEFÜHRTES ELEKTROWERKZEUG**
HAND-HELD ELECRTICAL TOOL
OUTIL ÉLECTRIQUE À MAIN

(30) Priorität: 26.06.2009 DE 202009017422 U; 18.12.2009 DE 102009054932
(43) Veröffentlichungstag der Anmeldung: 02.05.2012
(73) Patentinhaber: Robert Bosch GmbH, 70442 Stuttgart (DE)
(72) Erfinder: HERR, Tobias, 70569 Stuttgart (DE)
(86) Internationale Anmeldenummer: PCT/EP2010/057644
(87) Internationale Veröffentlichungsnummer: WO 2010/149474

(56) Entgegenhaltungen:
- DE-C- 582 962
- DE-C- 885 641
- FR-A1- 2 381 605
- JP-A- 4 300 112
- US-A- 3 625 530
- US-A- 3 807 815
- US-A- 4 325 436

## Beschreibung

### Stand der Technik

Die vorliegende Erfindung betrifft ein handgeführtes Elektrowerkzeug mit einem Gehäuse und einer Werkzeugaufnahme, die an einer Antriebswelle angeordnet ist, die in mindestens einem ersten und einem zweiten Kugellager drehbar gelagert ist, wobei das erste Kugellager einen ersten Innenring und das zweite Kugellager einen zweiten Innenring aufweist.

Aus dem Stand der Technik sind derartige handgeführte Elektrowerkzeuge bekannt, bei denen die Antriebswelle als Antriebsspindel ausgebildet ist, wobei das erste Kugellager im Bereich eines dem Elektrowerkzeug zugeordneten Getriebes angeordnet ist, z. B. eines in einem Getriebegehäuse angeordneten Planetengetriebes, in dessen Bereich ein der Antriebsspindel zugeordneter Spindellock vorgesehen ist, und das zweite Kugellager im Bereich einer dem Elektrowergzeug zugeordneten Werkzeugaufnahme angeordnet ist. Zwischen dem ersten und zweiten Kugellager sind Filzringe vorgesehen, um bei einem Abschalten eines derartigen Elektrowerkzeugs ein hartes Einschlagen der Antriebsspindel in den Spindellock zu verhindern. Diese Filzringe werden derart auf der Antriebsspindel angeordnet, dass zur Erzeugung eines Schleppmoments durch das Getriebegehäuse eine Vorspannung auf die Spindel erzeugt wird, um somit Geräusche und Verschleiß im Betrieb des Elektrowerkzeugs zu reduzieren.

Nachteilig am Stand der Technik ist, dass die Filzringe vergleichsweise teuer sind und auch im Normal- bzw. Leerlaufbetrieb des Elektrowerkzeugs zu einer störenden Reibungskraft führen. Dies kann zu einer ungewünschten Reduzierung der Lebensdauer des Elektrowerk-zeugs führen.

Aus US 3807815, die den Oberbegriff des Anspruchs 1 offenbart, ist ein Elektrowerkzeug mit einer vorgespannten Lageranordnung bekannt, welches dazu ausgebildet ist, eine thermische Ausdehnung der Bauteile auszugleichen.

In DE 582962 C sind Ausführungsformen einer spielfreie Wälzlagerung offenbart. In einer Ausführungsform sind vier Kegelrollenlager vorgesehen, wobei die Innenringe der beiden inneren Kegelrollenlager durch eine Feder auseinandergedrückt werden.

### Offenbarung der Erfindung

Eine Aufgabe der Erfindung ist es daher, ein neues handgeführtes Elektrowerkzeug mit einer reibungsarmen und kostengünstigen Leerlaufkonstruktion bereit zu stellen.

Dieses Problem wird gelöst durch ein handgeführtes Elektrowerkzeug mit einem Gehäuse und einer Werkzeugaufnahme, die an einer Antriebswelle angeordnet ist, die in mindestens einem ersten und einem zweiten Kugellager drehbar gelagert ist. Das erste Kugellager weist einen ersten Innenring und das zweite Kugellager einen zweiten Innenring auf. Zwischen dem ersten Innenring und dem zweiten Innenring ist ein Federelement zum Vorspannen des ersten Kugellagers gegen das zweite Kugellager angeordnet.

Die Erfindung ermöglicht somit die Bereitstellung eines handgeführten Elektrowerkzeugs, bei dem durch eine Verwendung eines kostengünstigen Federelements auf einen Einsatz von Filzringen verzichtet werden kann, wobei eine vergleichsweise hohe Laufruhe im Betrieb des Elektrowerkzeugs erreicht wird.

Erfindungsgemäß liegt das Federelement mit seinen axialen Endbereichen gegen die Innenringe an womit das Federelement derart am ersten und zweiten Innenring fixiert ist, dass bei einer Drehung der Antriebswelle ein Drehen des Federelements mit den Innenringen erfolgt.

Somit kann eine reibungsarme und verschleißfreie Verwendung und somit eine vergleichsweise lange Lebensdauer des Federelements erreicht werden.

Das erste Kugellager ist bevorzugt axial und radial unbeweglich im Gehäuse gelagert und auf der Antriebswelle im Schiebesitz angeordnet. Das erste Kugellager weist vorzugsweise einen Außenring auf, der in einem im Gehäuse befestigten Klemmring im Presssitz gelagert ist.

Somit kann auf einfache Art und Weise eine stabile und zuverlässige Lagerung des ersten Kugellagers im Gehäuse erreicht werden.

Das zweite Kugellager ist bevorzugt axial unbeweglich auf der Antriebswelle angeordnet und im Gehäuse axial verschiebbar gelagert. Das zweite Kugellager weist vorzugsweise einen Außenring auf, der in einem im Gehäuse axial und radial unbeweglich befestigten, ringartigen Element im Schiebesitz gelagert ist.

Somit kann auf einfache Art und Weise eine stabile und zuverlässige Lagerung des zweiten Kugellagers im Gehäuse erreicht werden.

Gemäß einer Ausführungsform ist die Antriebswelle über ein Getriebe antreibbar, wobei das erste Kugellager im Gehäuse zumindest abschnittsweise im Bereich einer Stirnseite des Gehäuses zugewandten Stirnseite des Getriebes angeordnet ist. Das zweite Kugellager ist bevorzugt im Gehäuse zumindest abschnittsweise im Bereich einer der Werkzeugaufnahme zugewandten Stirnseite des Gehäuses angeordnet.

Die Erfindung ermöglicht somit einen einfachen und kompakten Aufbau des erfindungsgemäßen Elektrowerkzeugs.

Bevorzugt ist ein Stützelement zur axialen Abstützung des zweiten Kugellagers vorgesehen, um eine Begrenzung einer axialen Verschiebung des zweiten Kugellagers in Richtung der Werkzeugaufnahme zu ermöglichen.

Somit kann auf einfache Art und Weise ein sicherer und zuverlässiger Betrieb des Elektrowerkzeugs gewährleistet werden.

Gemäß einer Ausführungsform ist zwischen dem zweiten Lager und der Werkzeugaufnahme ein Rastenwerk zur Schlagerzeugung für die Antriebswelle ausgebildet.

Die Erfindung ermöglicht somit einen einfachen und kompakten Aufbau des erfindungsgemäßen Elektrowerkzeugs auch bei Verwendung eines zugeordneten Rastenwerks.

### Kurze Beschreibung der Zeichnungen

Die Erfindung ist anhand von in den Zeichnungen dargestellten Ausführungsbei-spielen in der nachfolgenden Beschreibung näher erläutert. Es zeigen:
Fig. 1 eine schematische Ansicht eines handgeführten Elektrowerkzeugs gemäß einer ersten Ausführungsform, und
Fig. 2 eine vergrößerte Schnittansicht eines Ausschnitts des Elektrowerkzeugs von Fig. 1.

### Beschreibung der Ausführungsbeispiele

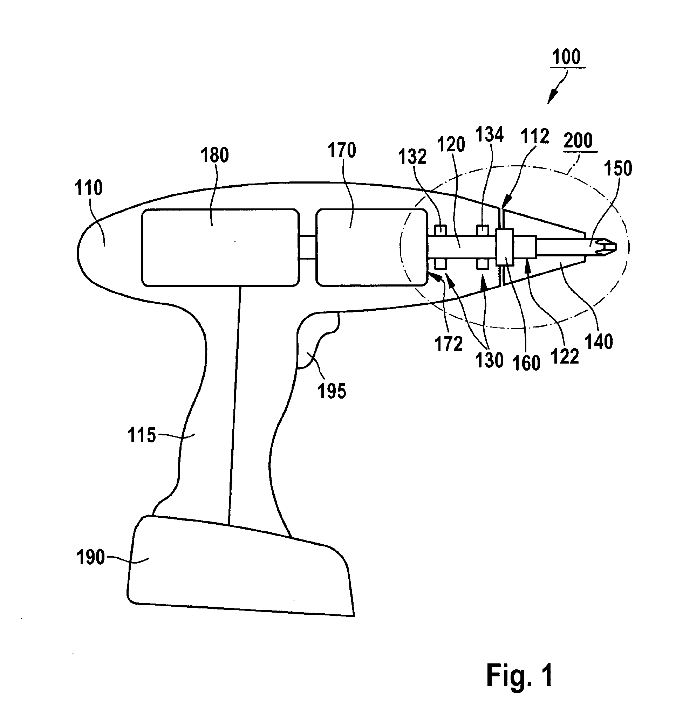

Fig. 1 zeigt ein handgeführtes Elektrowerkzeug 100, das ein Gehäuse 110 mit einem Handgriff 115 aufweist. Gemäß einer Ausführungsform ist das Elektrowerkzeug 100 zur netzunabhängigen Stromversorgung mechanisch und elektrisch mit einem Akkupack 190 verbindbar. In Fig. 1 ist das Elektrowerkzeug 100 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen, insbesondere Akku-betriebenen E-lektrowerkzeugen Anwendung finden kann, bei denen ein Werkzeug in Drehungen versetzt wird, z. B. bei einem Akku-Schrauber, einer Akku-Schlagbohrmaschine etc.

In dem Gehäuse 110 sind ein von dem Akkupack 190 mit Strom versorgter, elektrischer Antriebsmotor 180 und ein Getriebe 170 angeordnet. Der Antriebsmotor 180 ist illustrativ über einen Handschalter 195 betätigbar, d. h. ein- und ausschaltbar, und kann ein beliebiger Motortyp sein, z. B. ein elektronisch kommutierter Motor oder ein Gleichstrommotor. Vorzugsweise ist der Antriebsmotor 180 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung verzichtet wird.

Der Antriebsmotor 180 ist über das Getriebe 170 mit einer Antriebswelle 120 verbunden. Diese ist über eine Lageranordnung 130 drehbar im Gehäuse 110 gelagert und mit einer Werkzeugaufnahme 140 versehen, die im Bereich einer Stirnseite 112 des Gehäuses 110 angeordnet ist. Die Lageranordnung 130 kann hierbei am Gehäuse 110 befestigt sein, z. B. über zugeordnete Befestigungselemente, oder in einem zugeordneten Zwischenelement angeordnet sein, z.B. einem separaten Getriebegehäuse, in dem das Getriebe 170 angeordnet ist, oder einem separaten Motorgehäuse, in dem der Motor 180 und das Getriebe 170 angeordnet sind, wobei das Getriebegehäuse bzw. das Motorgehäuse in dem Gehäuse 110 angeordnet sind. Die Werkzeugaufnahme 140 dient zur Aufnahme eines Werkzeugs 150 und kann integraler Bestandteil der Antriebswelle 120 sein oder aufsatzförmig mit dieser verbunden sein. In Fig. 1 ist die Werkzeugaufnahme 140 beispielhaft aufsatzartig ausgebildet und über eine an der Antriebswelle 120 vorgesehene Befestigungsvorrichtung 122 an dieser befestigt.

Die Lageranordnung 130 weist gemäß einer Ausführungsform ein erstes Lager 134 und ein von diesem beabstandetes zweites Lager 132 auf. Das erste Lager 134 ist beispielhaft zumindest abschnittsweise im Bereich der Stirnseite 112 des Gehäuses 110 angeordnet und wird deshalb nachfolgend auch als "werkzeugaufnahmeseitiges Lager" bezeichnet. Das zweite Lager 132 ist beispielhaft zumindest abschnittsweise im Bereich einer der Stirnseite 112 des Gehäuses 110 zugewandten Stirnseite 172 des Getriebes 170 angeordnet und wird deshalb nachfolgend auch als "getriebeseitiges Lager" bezeichnet.

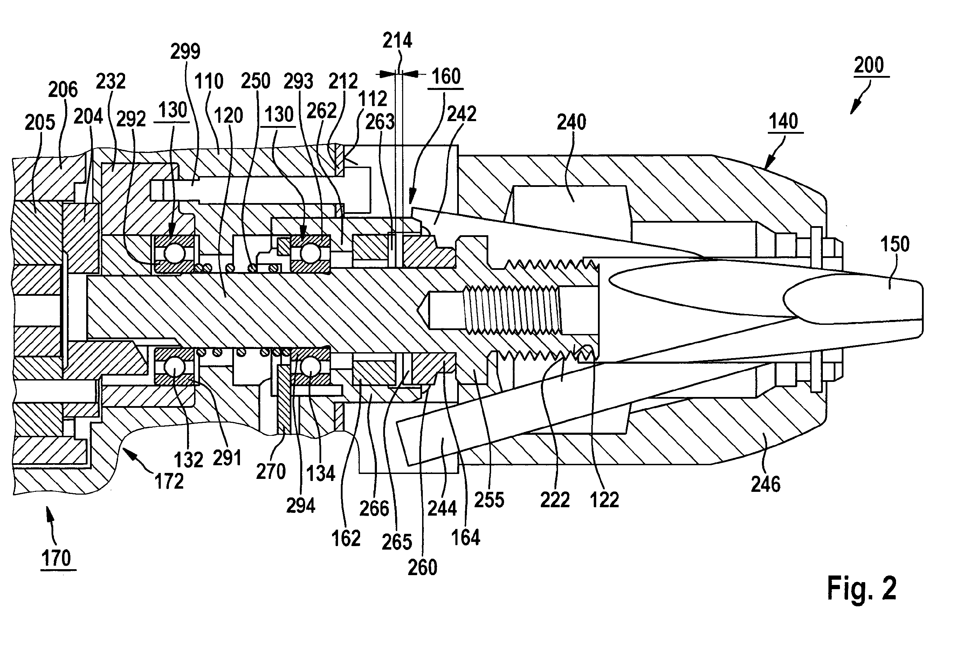

Gemäß einer Ausführungsform ist zwischen dem werkzeugaufnahmeseitigen Lager 134 und der Werkzeugaufnahme 140 ein Rastenwerk 160 ausgebildet. Dieses ermöglicht im Betrieb des Elektrowerkzeugs 100 die Realisierung eines Schlagbetriebs, bei dem eine schlagende Bewegung der Antriebswelle 120 erzeugt wird. Das Rastenwerk 160 wird nachfolgend in Bezug auf eine in Fig. 2 vergrößert dargestellte Schnittansicht eines Ausschnitts 200 im Detail beschrieben.

Fig. 2 zeigt den Ausschnitt 200 des handgeführten Elektrowerkzeugs 100 von Fig. 1 im Normalbetrieb, d. h. im Bohr- oder Schraubbetrieb ohne Schlagerzeugung, bzw. im Leerlauf des Elektrowerkzeugs 100. Der Ausschnitt 200 verdeutlicht eine beispielhafte Ausgestaltung des Werkzeugs 150 und der Werkzeugaufnahme 140, des Getriebes 170, der Lageranordnung 130 und der Antriebswelle 120, sowie des Rastenwerks 160 zur Schlagerzeugung für die Antriebswelle 120 im Schlagbetrieb des Elektrowerkzeugs 100.

Die Werkzeugaufnahme 140 weist beispielhaft ein Bohrfutter 240 auf, das an der Befestigungsvorrichtung 122 der Antriebswelle 120 befestigt ist. Die Befestigungsvorrichtung 122 ist beispielhaft als Außengewinde ausgebildet, das mit einem am Bohrfutter 240 vorgesehenen Innengewinde 222 im Gewindeeingriff steht. Darüber hinaus hat das Bohrfutter 240 eine vorgegebene Anzahl von Spannkörpern 242, 244, z. B. drei oder vier, zum Einspannen des Werkzeugs 150, sowie eine Spannhülse 246, die das Bohrfutter 240 im Wesentlichen ummantelt. Das Werkzeug 150 wird durch eine Drehung der Antriebswelle 120 im Betrieb des Elektrowerkzeugs 100 gedreht.

Das Getriebe 170 ist gemäß einer Ausführungsform ein mit verschiedenen Gang- bzw. Planetenstufen ausgebildetes Planetengetriebe, das im Betrieb des Elektrowerkzeugs 100 vom Antriebsmotor 180 drehend angetrieben wird. Das Planetengetriebe 170 hat beispielhaft ein Hohlrad 206, mindestens ein Planetenrad 205 sowie einen Mitnehmer 204, und überträgt das Drehmoment des Antriebsmotors 180 über die Planetenstufen mittels einer Drehmitnahmekontur des Mitnehmers 204 auf die Antriebswelle 120.

Wie aus Fig. 2 ersichtlich, sind die zur Lagerung der Antriebswelle 120 vorgesehenen Lager 132, 134 der Lageranordnung 130 bevorzugt als Kugellager ausgebildet. Die Antriebswelle 120 ist beispielhaft als Antriebsspindel mit einem Abstützflansch 255 ausgebildet, sodass die Lager 132, 134 im vorliegenden Ausführungsbeispiel als Spindellager dienen. Es wird jedoch darauf hingewiesen, dass auch andere Lagertypen im Rahmen der vorliegenden Erfindung verwendbar sind. Z. B. können die Lager 132, 134 alternativ als Gleitlager, Nadelhülse, Rollenlager oder andere Wälzlagertypen realisiert werden.

Das getriebeseitige Lager 132 hat beispielhaft einen Außenring 291 sowie einen Innenring 292 und ist axial und radial unbeweglich im Gehäuse 110 angeordnet. Illustrativ ist der Außenring 291 über einen Presssitz mit einem im Gehäuse 110 befestigten Klemmring 232 verbunden. Der Innenring 292 ist gemäß einer Ausführungsform im Schiebesitz auf der Antriebsspindel 120 angeordnet, sodass die Spindel 120 relativ zum Lager 132 axial verschiebbar ist. Das werkzeugaufnahmeseitige Lager 134 hat beispielhaft einen Außenring 293 sowie einen Innenring 294 und ist über den Innenring 294 axial unbeweglich auf der Antriebsspindel 120 angeordnet, z. B. im Presssitz. Alternativ hierzu kann das Lager 134 bzw. dessen Innenring 294 an die Antriebsspindel 120 angeformt und somit einstückig mit dieser ausgebildet sein. Der Außenring 293 ist im Schiebesitz in einem nach Art einer Arretierhülse ausgebildeten, ringartigen Element 266 angeordnet, das axial und radial unbeweglich im Gehäuse 110 bzw. im Bereich von dessen Stirnseite 112 befestigt ist. Somit ist das Lager 134 radial unbeweglich in der Arretierhülse 266 gelagert, aber relativ zu dieser axial verschiebbar und somit im Schiebesitz im Gehäuse 110 gelagert.

Gemäß einer Ausführungsform wird das Lager 134 von einem zwischen diesem und dem getriebeseitigen Lager 132 angeordneten Federelement 250, z. B. einer Druckfeder, in Richtung des Bohrfutters 240 beaufschlagt. Somit werden die Lager 132, 134 gegeneinander vorgespannt. Das Federelement 250 liegt erfindungsgemäß mit seinen axialen Endbereichen gegen die Innenringe 292, 294 der Lager 132 bzw. 134 an und ist somit derart an diesen fixiert, dass das Federelement 250 im Betrieb des Elektrowerkzeugs 100 mit gleicher Geschwindigkeit rotiert, wie die Antriebsspindel 120 und die Innenringe 292, 294. Darüber hinaus kann das Federelement 250 auch an den Innenringen 292, 294 befestigt sein.

Das Rastenwerk 160 ist illustrativ zwischen dem werkzeugaufnahmeseitigen Lager 134 und dem Bohrfutter 240 angeordnet und weist beispielhaft mindestens eine an der Antriebsspindel 120 befestigte, erste Rastenscheibe 164 und mindestens eine am Gehäuse 110 befestigte, zweite Rastenscheibe 162 auf. Die Rastenscheiben 162, 164 sind beim Schlagbetrieb des Elektrowerkzeugs 100 zur Schlagerzeugung für die Antriebswelle 120 im Wirkeingriff miteinander über eine an der Rastenscheibe 162 vorgesehene, stirnseitige Verzahnung 263 und eine an der Rastenscheibe 164 vorgesehene, stirnseitige Verzahnung 265. Im Normalbetrieb bzw. Leerlauf sind die Verzahnungen 263, 265 voneinander beabstandet bzw. getrennt.

Die erste Rastenscheibe 164 ist axial und radial unbeweglich auf der Antriebsspindel 120 befestigt, z. B. im Presssitz, und illustrativ am Abstützflansch 255 abgestützt. Alternativ hierzu kann die Rastenscheibe 164 an die Antriebsspindel 120 angeformt und somit einstückig mit dieser ausgebildet sein. Gemäß einer Ausführungsform ist die erste Rastenscheibe 164 dem Bohrfutter 240 zugewandt und wird deshalb nachfolgend auch als "bohrfutterseitige Rastenscheibe" bezeichnet. Diese ist bevorzugt zumindest abschnittsweise radial innerhalb der Spannkörper 242, 244 und/oder der Spannhülse 246 angeordnet.

Die zweite Rastenscheibe 162 ist mit dem ringartigen Element 266 verbunden, wobei die Rastenscheibe 162 am ringartigen Element 266 befestigt bzw. angeformt oder einstückig mit diesem ausgebildet sein kann. Deshalb wird die zweite Rastenscheibe 162 nachfolgend auch als "getriebeseitige Rastenscheibe" bezeichnet. Diese ist ebenso wie die bohrfutterseitige Rastenscheibe 164 bevorzugt außerhalb des Gehäuses 110 angeordnet. Die Stirnseite 112 des Gehäuses 110 wird beispielhaft von einem blechartigen Fixierglied 212 gebildet, das zur Fixierung des ringartigen Elements 266 im bzw. am Gehäuse 110 dient. Das Fixierglied 212 ist illustrativ über ein schraubenartiges Befestigungselement 299 mit dem in dem Gehäuse 110 vorgesehenen Klemmring 232 verbunden, z. B. verschraubt, sodass das Fixierglied 212 und der Klemmring 232 durch das Element 299 an dem Gehäuse 110 fixiert sind.

Gemäß einer Ausführungsform ist in dem ringartigen Element 266 bzw. in der getriebeseitigen Rastenscheibe 162 das werkzeugaufnahmeseitige Lager 134 wie oben beschrieben axial verschiebbar, aber radial unbeweglich gelagert. Um eine axiale Verschiebung des Lagers 134 in Richtung des Bohrfutters 240 zu begrenzen, weist die getriebeseitige Rastenscheibe 162 ein Stützelement 262 zur axialen Abstützung des Lagers 134 auf. Dieses kann ebenso von der getriebseitigen Rastenscheibe 162 ausgebildet bzw. integraler Bestandteil hiervon sein oder, wie in Fig. 2 illustriert, auch an die Arretierhülse 266 angeformt sein.

In Richtung des Getriebes 170 kann eine axiale Verschiebung des Lagers 134 durch ein Blockierglied 270 blockiert werden. Dieses ist bevorzugt mit einer zwecks Übersichtlichkeit und Einfachheit der Darstellung nicht gezeigten Einstelleinrichtung verbunden, mit der insbesondere der Normalbetrieb oder der Schlagbetrieb des Elektrowerkzeugs 100 selektiv einstellbar ist.

Zur Abdichtung des Rastenwerks 160 ist ein Dichtelement 260 vorgesehen, um dieses gegen Fettverlust, Schmutz und Staub zu schützen und somit eine Beeinträchtigung seiner Funktionalität zu verhindern. Das Dichtelement 260 kann beispielsweise als Faltenbalg ausgebildet sein, sodass dessen Lufthaushalt bei einer axialen Verschiebung der bohrfutterseitigen Rastenscheibe 164 nicht beeinflusst wird. Ebenso kann ein zwischen den Rastenscheiben 162, 164 vorgesehener O-Ring, ein Radialwellendichtring, oder eine Spaltdichtung, d. h. eine durch einen Luftspalt mit axialer Ausdehnung ausgebildete Dichtung, Anwendung finden, sodass eine Entlüftung zwischen Antriebsspindel 120 und getriebeseitiger Rastenscheibe 162 bzw. zwischen werkzeugaufnahmeseitigem Lager 134 und getriebeseitiger Rastenscheibe 162 ermöglicht wird.

Im Normalbetrieb oder im Leerlauf des Schlagbetriebs des Elektrowerkzeugs 100 wird das werkzeugaufnahmeseitige Lager 134 und somit die Antriebsspindel 120 von der Druckfeder 250 in axialer Richtung zur Werkzeugaufnahme 140 hin gedrückt bzw. geschoben. Gemäß einer Ausführungsform wird hierbei beim Normalbetrieb das Lager 134 gegen das Stützelement 262 gedrückt und mit dem Blockierglied 270 blockiert. Somit kann die Antriebsspindel 120 nicht in Richtung des Planetengetriebes 170 verschoben werden, sodass die Rastenscheiben 162, 164 um eine vorgegebene Distanz 214 voneinander beabstandet sind und deren stirnseitige Verzahnungen 263, 265 somit nicht in Wirkeingriff gebracht werden können.

Im Schlagbetrieb des Elektrowerkzeugs 100 wird das werkzeugaufnahmeseitige Lager 134 durch Freigabe des Blockierglieds 270 axial freigegeben, sodass eine axiale Verschiebung der Antriebsspindel 120 ermöglicht wird. Hierbei kann nun durch einen von einem Anwender auf das Elektrowerkzeug 100 bzw. dessen Gehäuse 110 ausgeübten Anpressdruck eine axiale Verschiebung des Gehäuses 110 relativ zur Werkzeugaufnahme 140 gegen die Kraft des Federelements 250 derart erreicht werden, dass die stirnseitigen Verzahnungen 263, 265 der Rastenscheiben 162 bzw. 164 ineinander greifen und durch diesen Wirkeingriff eine Schlagerzeugung für die Antriebsspindel 120 ermöglicht wird. Eine derartige Schlagerzeugung ist aus dem Stand der Technik hinreichend bekannt, sodass hier zwecks Knappheit der Beschreibung auf eine eingehende Beschreibung verzichtet wird.

Da das Federelement 250 das werkzeugaufnahmeseitige Lager 134 wie oben beschrieben in Richtung des Bohrfutters 240 beaufschlagt, ermöglicht dies, das Elektrowerkzeug 100 in den Normalbetrieb umzuschalten oder im Leerlauf des Schlagbetriebs zu betreiben. Zur Umschaltung in den Normalbetrieb wird das werkzeugaufnahmeseitige Lager 134 wie oben beschrieben mittels des Blockiergliedes 270 in einer dem Normalbetrieb zugeordneten, axialen Position blockiert.

## Patentansprüche

1. Handgeführtes Elektrowerkzeug (100) mit einem Gehäuse (110) und einer Werkzeugaufnahme (140), die an einer Antriebswelle (120) angeordnet ist, die in mindestens einem ersten und einem zweiten Kugellager (132, 134) drehbar gelagert ist, wobei das erste Kugellager (132) einen ersten Innenring (292) und das zweite Kugellager (134) einen zweiten Innenring (294) aufweist, wobei zwischen dem ersten Innenring (292) und dem zweiten Innenring (294) ein Federelement (250) zum Vorspannen des ersten Kugellagers (132) gegen das zweite Kugellager (134) angeordnet ist, **dadurch gekennzeichnet, dass** das Federelement (250) mit seinen axialen Endbereichen gegen die Innenringe (292, 294) anliegt und somit derart am ersten und zweiten Innenring (292, 294) fixiert ist, dass bei einer Drehung der Antriebswelle (120) ein Drehen des Federelements (250) mit den Innenringen (292, 294) erfolgt.

2. Elektrowerkzeug nach Anspruch 1, **dadurch gekennzeichnet, dass** das Federelement (250) am ersten und zweiten Innenring (292, 294) befestigt ist.

3. Elektrowerkzeug nach einem der Ansprüche 1 oder 2, **dadurch gekennzeichnet, dass** das erste Kugellager (132) axial und radial unbeweglich im Gehäuse (110) gelagert ist und auf der Antriebswelle (120) im Schiebesitz angeordnet ist.

4. Elektrowerkzeug nach Anspruch 3, **dadurch gekennzeichnet, dass** das erste Kugellager (132) einen Außenring (291) aufweist, der in einem im Gehäuse (110) befestigten Klemmring (232) im Presssitz gelagert ist.

5. Elektrowerkzeug nach einem der vorhergehenden Ansprüche, **dadurch gekennzeichnet, dass** das zweite Kugellager (134) axial unbeweglich auf der Antriebswelle (120) angeordnet ist und im Gehäuse (110) axial verschiebbar gelagert ist.

6. Elektrowerkzeug nach Anspruch 5, **dadurch gekennzeichnet, dass** das zweite Kugellager (134) einen Außenring (293) aufweist, der in einem im Gehäuse (110) axial und radial unbeweglich befestigten, ringartigen Element (266) im Schiebesitz gelagert ist.

7. Elektrowerkzeug nach einem der vorhergehenden Ansprüche, **dadurch gekennzeichnet, dass** die Antriebswelle (120) über ein Getriebe (170) antreibbar ist, wobei das erste Kugellager (132) im Gehäuse (110) zumindest abschnittsweise im Bereich einer einer Stirnseite (112) des Gehäuses (110) zugewandten Stirnseite (172) des Getriebes (170) angeordnet ist.

8. Elektrowerkzeug nach einem der vorhergehenden Ansprüche, **dadurch gekennzeichnet, dass** das zweite Kugellager (134) im Gehäuse (110) zumindest abschnittsweise im Bereich einer der Werkzeugaufnahme (140) zugewandten Stirnseite (112) des Gehäuses (110) angeordnet ist.

9. Elektrowerkzeug nach einem der vorhergehenden Ansprüche, **dadurch gekennzeichnet, dass** ein Stützelement (262) zur axialen Abstützung des zweiten Kugellagers (134) vorgesehen ist, um eine Begrenzung einer axialen Verschiebung des zweiten Kugellagers (134) in Richtung der Werkzeugaufnahme (140) zu ermöglichen.

10. Elektrowerkzeug nach einem der vorhergehenden Ansprüche, **dadurch gekennzeichnet, dass** zwischen dem zweiten Lager (134) und der Werkzeugaufnahme (140) ein Rastenwerk (160) zur Schlagerzeugung für die Antriebswelle (120) ausgebildet ist.

11. Elektrowerkzeug nach einem der vorhergehenden Ansprüche, **gekennzeichnet durch** ein Blockierglied (270), welches dazu ausgebildet ist, eine axiale Verschiebung des zweiten Kugellagers (134) in Richtung des Getriebes (170) zu blockieren.

12. Elektrowerkzeug nach Anspruch 11, **dadurch gekennzeichnet, dass** im Bohr- oder Schraubbetrieb das zweite Lager (134) durch das Blockierglied (270) axial fixiert ist, wobei das zweite Lager (134) von dem Federelement (250) in Richtung auf das Stützelement (262) vorgespannt ist.

13. Elektrowerkzeugs nach einem der Ansprüche 11 oder 12, **dadurch gekennzeichnet, dass** im Schlagbetrieb das zweite Lager (134) durch Freigabe des Blockierglieds (270) axial derart freigegeben ist, dass eine axiale Verschiebung der Antriebswelle (120) möglich ist.

## Claims

1. Hand-held electrical tool (100) with a housing (110) and with a tool-holding fixture (140) arranged on a drive shaft (120) which is mounted rotatably in at least one first and one second ball bearing (132, 134), the first ball bearing (132) having a first inner ring (292) and the second ball bearing (134) having a second inner ring (294), a spring element (250) for prestressing the first ball bearing (132) against the second ball bearing (134) being arranged between the first inner ring (292) and the second inner ring (294), **characterized in that** the spring element (250) bears with its axial end regions against the inner rings (292, 294) and is thus fixed to the first and the second inner ring (292, 294) in such a way that, when the drive shaft (120) is rotated, rotation of the spring element (250) together with the inner rings (292, 294) takes place.

2. Electrical tool according to Claim 1, **characterized in that** the spring element (250) is fastened to the first and the second inner ring (292, 294).

3. Electrical tool according to either one of Claims 1 and 2, **characterized in that** the first ball bearing (132) is mounted axially and radially immovably in the housing (110) and is arranged with a sliding fit on the drive shaft (120).

4. Electrical tool according to Claim 3, **characterized in that** the first ball bearing (132) has an outer ring (291) which is mounted with a press fit in a clamping ring (232) fastened in the housing (110).

5. Electrical tool according to one of the preceding claims, **characterized in that** the second ball bearing (134) is arranged axially immovably on the drive shaft (120) and is mounted axially displaceably in the housing (110).

6. Electrical tool according to Claim 5, **characterized in that** the second ball bearing (134) has an outer ring (293) which is mounted with a sliding fit in a ring-like element (266) fastened axially and radially immovably in the housing (110).

7. Electrical tool according to one of the preceding claims, **characterized in that** the drive shaft (120) is drivable via a gear (170), the first ball bearing (132) being arranged in the housing (110) at least partially in the region of an end face (172) of the gear (170), the said end face confronting an end face (112) of the housing (110).

8. Electrical tool according to one of the preceding claims, **characterized in that** the second ball bearing (134) is arranged in the housing (110) at least partially in the region of an end face (112) of the housing (110), the said end face confronting the tool-holding fixture (140).

9. Electrical tool according to one of the preceding claims, **characterized in that** a supporting element (262) for the axial support of the second ball bearing (134) is provided, in order to make it possible to limit an axial displacement of the second ball bearing (134) in the direction of the tool-holding fixture (140).

10. Electrical tool according to one of the preceding claims, **characterized in that** a catch mechanism (160) for generating percussions for the drive shaft (120) is formed between the second bearing (134) and the tool-holding fixture (140).

11. Electrical tool according to one of the preceding claims, **characterized by** a blocking member (270) which is designed to block an axial displacement of the second ball bearing (134) in the direction of the gear (170).

12. Electrical tool according to Claim 11, **characterized in that**, in drilling or screwing operation, the second bearing (134) is fixed axially by the blocking member (270), the second bearing (134) being prestressed in the direction of the supporting element (262) by the spring element (250).

13. Electrical tool according to either one of Claims 11 and 12, **characterized in that**, in percussion operation, the second bearing (134) is released axially by the release of the blocking member (270), in such a way that axial displacement of the drive shaft (120) is possible.

## Revendications

1. Outil électrique à main (100) comprenant un boîtier (110) et un logement d'outil (140) qui est disposé sur un arbre d'entraînement (120) qui est monté à rotation dans au moins un premier et un deuxième roulement à billes (132, 134), le premier roulement à billes (132) présentant une première bague interne (292) et le deuxième roulement à billes (134) présentant une deuxième bague interne (294), un élément de ressort (250) pour précontraindre le premier roulement à billes (132) contre le deuxième roulement à billes (134) étant disposé entre la première bague interne (292) et la deuxième bague interne (294), **caractérisé en ce que** l'élément de ressort (250) s'applique avec ses régions d'extrémité axiales contre les bagues internes (292, 294) et est ainsi fixé sur la première et la deuxième bague interne (292, 294) de telle sorte que lors d'une rotation de l'arbre d'entraînement (120), il se produise une rotation de l'élément de ressort (250) avec les bagues internes (292, 294).

2. Outil électrique selon la revendication 1, **caractérisé en ce que** l'élément de ressort (250) est fixé sur la première et la deuxième bague interne (292, 294).

3. Outil électrique selon l'une quelconque des revendications 1 ou 2, **caractérisé en ce que** le premier roulement à billes (132) est monté axialement et radialement de manière immobile dans le boîtier (110) et est disposé avec ajustement coulissant sur l'arbre d'entraînement (120).

4. Outil électrique selon la revendication 3, **caractérisé en ce que** le premier roulement à billes (132) présente une bague externe (291) qui est montée avec ajustement serré dans une bague de serrage (232) fixée dans le boîtier (110).

5. Outil électrique selon l'une quelconque des revendications précédentes, **caractérisé en ce que** le deuxième roulement à billes (134) est disposé de manière axialement immobile sur l'arbre d'entraînement (120) et est monté de manière déplaçable axialement dans le boîtier (110).

6. Outil électrique selon la revendication 5, **caractérisé en ce que** le deuxième roulement à billes (134) présente une bague externe (293), qui est montée avec ajustement coulissant dans un élément (266) de type bague fixé axialement et radialement de manière immobile dans le boîtier (110).

7. Outil électrique selon l'une quelconque des revendications précédentes, **caractérisé en ce que** l'arbre d'entraînement (120) peut être entraîné par une transmission (170), le premier roulement à billes (132) étant disposé dans le boîtier (110) au moins en partie dans la région d'un côté frontal (172) de la transmission (170) tourné vers un côté frontal (112) du boîtier (110).

8. Outil électrique selon l'une quelconque des revendications précédentes, **caractérisé en ce que** le deuxième roulement à billes (134) est disposé dans le boîtier (110) au moins en partie dans la région d'un côté frontal (112) du boîtier (110) tourné vers le logement d'outil (140).

9. Outil électrique selon l'une quelconque des revendications précédentes, **caractérisé en ce qu'**un élément de support (262) pour le support axial du deuxième roulement à billes (134) est prévu, afin de permettre une limitation d'un déplacement axial du deuxième roulement à billes (134) dans la direction du logement d'outil (140).

10. Outil électrique selon l'une quelconque des revendications précédentes, **caractérisé en ce qu'**entre le deuxième roulement (134) et le logement d'outil (140) est réalisé un mécanisme d'encliquetage (160) pour générer une percussion pour l'arbre d'entraînement (120).

11. Outil électrique selon l'une quelconque des revendications précédentes, **caractérisé par** un organe de blocage (270) qui est réalisé de manière à bloquer un déplacement axial du deuxième roulement à billes (134) dans la direction de la transmission (170).

12. Outil électrique selon la revendication 11, **caractérisé en ce qu'**en mode de perçage ou de vissage, le deuxième roulement (134) est fixé axialement par l'organe de blocage (270), le deuxième roulement (134) étant précontraint par l'élément de ressort (250) dans la direction de l'élément de support (262).

13. Outil électrique selon l'une quelconque des revendications 11 ou 12, **caractérisé en ce qu'**en mode de percussion, le deuxième roulement (134) est libéré axialement par libération de l'organe de blocage (270) de telle sorte qu'un déplacement axial de l'arbre d'entraînement (120) soit possible.
